**Europäisches Patentamt**

**European Patent Office**

**Office européen des brevets**

(19)

(11) Veröffentlichungsnummer: **0 185 193**

**A2**

(12) # EUROPÄISCHE PATENTANMELDUNG

(21) Anmeldenummer: **85114313.1**

(22) Anmeldetag: **11.11.85**

(51) Int. Cl.⁴: **C 08 G 59/16**
C 09 D 3/58, C 08 C 19/40

(30) Priorität: **19.11.84 DE 3442200**

(43) Veröffentlichungstag der Anmeldung:
**25.06.86 Patentblatt 86/26**

(84) Benannte Vertragsstaaten:
**AT BE CH DE FR GB IT LI NL**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Fischer, Herbert, Dr.**
**Am Nettchesfeld 14**
**D-4000 Düsseldorf 13(DE)**

(72) Erfinder: **Wegemund, Bernd, Dr.**
**Händelweg 3**
**D-5657 Haan 1(DE)**

(72) Erfinder: **Gress, Wolfgang**
**Westfalenweg 247**
**D-5600 Wuppertal-Elberfeld(DE)**

(72) Erfinder: **Gorzinski, Manfred**
**Bogenstrasse 6**
**D-4000 Düsseldorf 1(DE)**

(54) **Lufttrocknendes Lackbindemittel auf Basis ungesättigter Polymerer.**

(57) Die Erfindung betrifft ein lufttrocknendes Lackbindemittel aus epoxidierten ungesättigten Polymeren und ungesättigten Carbonsäuren, das dadurch gekennzeichnet ist, daß es sich um ein Ringöffnungsprodukt aus einem Epoxid eines ungesättigten Polymeren mit einem Zahlenmittel des Molekulargewichts im Bereich von 500 bis 5000 einerseits und einer oder mehreren ungesättigten Carbonsäuren mit 6 bis 22 C-Atomen oder einem oder mehreren Alkoholen mit 2 bis 6 Hydroxygruppen oder Hydroxyalkylaminen mit mindestens einer Hydroxyalkylgruppe andererseits handelt, dessen Säurezahl im Bereich von 0,1 bis 20 liegt, ein Verfahren zur Herstellung eines derartigen lufttrocknenden Lackbindemittels, das dadurch gekennzeichnet ist, daß man ein teilepoxidiertes ungesättigtes Polymeres der vollständigen Ringöffnung mit einer oder mehreren ungesättigten monofunktionellen Carbonsäuren oder einem oder mehreren Alkoholen oder einem Hydroxyalkylamin mit mindestens einer Hydroxyalkylgruppe unterwirft und im Falle der Verwendung eines oder mehrerer Alkohole oder Hydroxyalkylamine das entstandene Polyol mit einer oder mehreren ungesättigten Carbonsäuren verestert, sowie die Verwendung derartiger lufttrocknender Lackbindemittel in lösungsmittelarmen Lacksystemen.

0185193

Henkel KGaA                                    31.10.85
Henkelstraße 67                                Dr.Wi/Mj
4000 Düsseldorf


D 7138/7413 EP

Lufttrocknendes Lackbindemittel auf Basis
ungesättigter Polymerer


Die Erfindung betrifft ein lufttrocknendes Lackbindemittel auf Basis epoxidierter ungesättigter Polymerer und ungesättigter Fettsäuren bzw. mehrfunktioneller Alkohole oder Hydroxyalkylamine, ein Verfahren zur Herstellung eines derartigen lufttrocknenden Lackbindemittels sowie seine Verwendung in vorzugsweise lösungsmittelarmen Lacken.

cis-1,4-Polybutadien wird - wie auch andere ungesättigte Polymere - bereits seit Jahren als lufttrocknendes Lackbindemittel bzw. als Zusatz zu derartigen Lackbindemitteln verwendet. Wenngleich die Trocknungseigenschaften dieser relativ niedermolekularen Polymeren denen von Alkydharzlacken entsprechen, so wirkt sich doch das äußerst schlechte Pigmentaufnahmevermögen, die Tendenz zur Schrumpfung und das nicht genügend hohe Molekulargewicht ausgehärteter Lackfilme negativ aus. Es hat daher nicht an Versuchen gefehlt, Polybutadien und andere ungesättigte Polymere durch Epoxidation und anschließende Umsetzungen zu modifizieren. So wird in der japanischen Patentanmeldung 72 25,131 (zitiert bei Chem. Abstracts Vol. 78, (1973) 5532v) vorgeschlagen, epoxidiertes Polybutadien oder ein epoxidiertes Polybutadien-Copolymer mit einer Polycarbonsäure umzusetzen, wobei auch noch Fettsäuren oder Fettalkohole mitverwendet werden können. Bei dieser Vorgehensweise entstehen Produkte mit

. . .

einer Säurezahl zwischen 20 und 200, die sich als Wasserlacke konfektionieren lassen. Aufgrund der hohen Säurezahl genügen die Produkte jedoch nicht den Anforderungen, die an lufttrocknende Alkydharzbindemittel zu stellen sind.

In der japanischen Patentanmeldung 73 56,228 (zitiert bei Chem. Abstracts Vol. 80, (1974) 38469z) wird vorgeschlagen, epoxidiertes Polybutadien mit molaren Mengen an aromatischen Hydroxycarbonsäuren umzusetzen und das Umsetzungsprodukt mit einem Vinylchlorid-Polymeren in Lösung zu mischen. Die Lösungen eignen sich zur Herstellung sehr korrosionsbeständiger Überzüge, die jedoch aufgrund der sehr geringen Anzahl trocknungsfähiger Doppelbindungen nicht zu einem mechanisch beständigen Lackfilm härten.

In der japanischen Patentanmeldung 79 07,491 (zitiert bei Chem. Abstracts Vol. 90 (1979) 170265r) wird ein weiterer Wasserlack auf Basis Polybutadien vorgeschlagen. Danach wird das Umsetzungsprodukt eines epoxidierten 1,2-Polybutadiens mit Monocarbonsäuren in Gegenwart von polymerisierbaren Carbonsäuren und Radikalbildnern erwärmt, so daß durch Kettenübertragungsreaktionen die Monocarbonsäuren mit den Vinylgruppen eine Polymerisation eingehen. Auch hierbei entsteht ein Wasserlackbindemittel, das sowohl Carboxyl- als auch Hydroxylgruppen enthält und somit nicht die von einem lufttrocknenden Lack geforderte Wasserbeständigkeit aufweist. Da als Monocarbonsäure eine doppelbindungsarme Kokosfettsäure verwendet wird, lassen sich derartige Produkte nur durch Ofentrocknung härten.

Schließlich wird in der japanischen Patentanmeldung 73 92,434 (zitiert bei Chem. Abstracts Vol. 80, (1974) 110024v) vorgeschlagen, epoxidiertes Polybutadien mit polymerisierbaren Monocarbonsäuren wie (Meth)acrylsäure umzusetzen und als Primer für Pulverlacke zu verwenden.

. . .

Die beschriebenen Lackbindemittel auf Basis epoxidierter Polybutadiene enthalten sämtlich funktionelle Gruppen, die beispielsweise bei der Ringöffnung der Epoxidgruppen entstanden sind oder aus den Umsetzungsagentien entstammen. Derartige funktionale Bindemittel erreichen jedoch nicht die Wasserfestigkeit von lufttrocknenden Alkydharzbindemitteln. Ein weiterer Nachteil der beschriebenen Produkte liegt darin, daß durch Epoxidation Doppelbindungen, die an der Sauerstoffhärtung teilnehmen könnten, verbraucht werden und somit die Lufttrocknungsgeschwindigkeit stark herabgesetzt ist.

Für den Lackfachmann besteht ein Bedürfnis, die vorteilhaften Eigenschaften von zahlreichen ungesättigten Polymeren, besonders von Polybutadienen, nämlich ihre Trocknungsfähigkeit und ihre niedere Viskosität, die die Konfektionierung von Lacken mit höherem Feststoffgehalt erlaubt, mit den günstigen Eigenschaften von lufttrocknenden Alkydharzlacken zu verbinden. Dabei sind aus Umweltgesichtspunkten festkörperreiche Lacke von besonderem Interesse.

Aufgabe der Erfindung ist somit ein lufttrocknendes Lackbindemittel niederer Viskosität auf Basis teilepoxidierter vollveresterter Polymere mit einer möglichst geringen Anzahl an funktionellen Gruppen, die die Wasserfestigkeit herabsetzen könnten, bereitzustellen, das sich insbesondere für festkörperreiche Lacke eignet.

Die Erfindung betrifft ein lufttrocknendes Lackbindemittel aus epoxidierten, ungesättigen Polymeren und ungesättigten Carbonsäuren, dadurch gekennzeichnet, daß es sich um ein Ringöffnungsprodukt aus einem Epoxid eines ungesättigten Polymeren mit einem Zahlenmittel des Molekulargewichts im Bereich von 500 bis 5000 aus der Gruppe unhydrierte und/oder teilweise hydrierte Polybutadiene, unhydrierte und/oder teilweise hydrierte Polyisoprene, Copolymere aus Butadien und Isopren, Polychloropren, Copolymere von Polybutadien mit einem oder

. . .

mehreren Monomeren aus der Gruppe Acrylnitril, Styrol, Ethen, Propen, Buten, i-Buten, Penten und Chloropren, Pentenamer, EPDM-Kautschuke, ungesättigte Kohlenwasserstoffharze, Cyclopentadienharze und Polynorbornen einerseits und einer oder mehreren ungesättigten Carbonsäuren mit 6 bis 22 C-Atomen oder einem oder mehreren Alkoholen mit 2 bis 6 Hydroxygruppen oder Hydroxyalkylaminen mit mindestens einer Hydroxyalkylgruppe, wobei die Hydroxygruppen mit einer oder mehreren ungesättigten Carbonsäuren mit 6 bis 22 C-Atomen bis zu einer OH-Zahl kleiner 25 verestert sind, andererseits handelt, dessen Säurezahl im Bereich von 0,1 bis 20 liegt.

Die Erfindung betrifft außerdem ein Verfahren zur Herstellung von lufttrocknenden Lackbindemitteln durch Ringöffnung epoxidierter, ungesättigter Polymerer mit ungesättigten Carbonsäuren und/oder Alkoholen oder Hydroxy-substituierten Aminen, das dadurch gekennzeichnet ist, daß man ein teilepoxidiertes, ungesättigtes Polymeres aus der Gruppe unhydrierte und/ oder teilweise hydrierte Polybutadiene, unhydrierte und/oder teilweise hydrierte Polyisoprene, Copolymere aus Butadien und Isopren, Polychloropren, Copolymere von Polybutadien mit einem oder mehreren Monomeren aus der Gruppe Acrylnitril, Styrol, Ethen, Propen, Buten, i-Buten, Penten und Chloropren, Pentenamer, EPDM-Kautschuke, ungesättigte Kohlenwasserstoffharze, Cyclopentadienharze und Polynorbornen der vollständigen Ringöffnung mit einer oder mehreren ungesättigten, monofunktionellen Carbonsäuren mit 6 bis 22 C-Atomen oder Alkoholen mit 2 bis 6 Hydroxygruppen oder Hydroxyalkylaminen mit mindestens einer Hydroxyalkylgruppe unterwirft und im Falle der Verwendung eines oder mehrerer Alkohole oder Hydroxyalkylamine das entstandene Polyol mit der gleichen oder einer oder mehreren anderen ungesättigten Carbonsäuren mit 6 bis 22 C-Atomen bis zu einer Rest-OH-Zahl kleiner 25 verestert.

. . .

Die Erfindung betrifft auch die Verwendung der lufttrocknenden Lackbindemittel nach Ansprüchen 1 bis 20 zusammen mit üblichen Zusatzstoffen wie Sikkativen, Pigmenten, Pigmentdispergatoren, Hilfsstoffen und gegebenenfalls Reaktiv-Verdünnern in vorzugsweise lösungsmittelarmen Lacksystemen.

Erfindungsgemäß bevorzugte Harze enthalten fast ausschließlich veresterte OH-Gruppen. So kann die OH-Zahl kleiner 25, bevorzugt kleiner 15 oder besonders bevorzugt kleiner 10 mg KOH/g sein.

Als ungesättigte Polymere sind zahlreiche Polymere mit ethylenischen Doppelbindungen verwendbar, solange sie ein Zahlenmittel des Molekulargewichts im Bereich von 500 bis 5000 aufweisen. Erfindungsgemäß werden Polymere aus der Gruppe unhydrierte und/oder teilweise hydrierte Polybutadiene, unhydrierte und/oder teilweise hydrierte Polyisoprene, Copolymere des Butadiens und Isoprens, Polychloropren, Copolymere von Butadienen mit einem oder mehreren Monomeren aus der Gruppe Acrylnitril, Styrol, Ethen, Propen, n-Buten, i-Buten, Penten und Chloropren, Pentenamer, EPDM-Kautschuke, ungesättigte Kohlenwasserstoffharze, Cyclopentadienharze und Polynorbornen verwendet. Unter unhydrierten Polybutadienen und Polyisoprenen werden die durch Polymerisation entstandenen Polymeren des Butadiens und Isoprens verstanden, die weder vor noch nach der Polymerisation durch teilweise Hydrierung in irgendeiner Weise modifiziert wurden. Unter teilweise hydrierten Polybutadienen bzw. Polyisoprenen werden hier wie im folgenden Polymere des Butadiens bzw. Isoprens verstanden, deren ethylenische Doppelbindungen durch Umsetzung mit Wasserstoff teilweise hydriert wurden. Die Jodzahl solcher Polymere beträgt nach der Hydrierung 100 bis 300. Die Copolymeren des Polybutadiens mit Acrylnitril, Styrol, Ethen, Propen, n-Buten, i-Buten, Penten und/ oder Chloropren umfassen neben alternierenden Folgen der einzelnen Monomeren auch Blockpolymere und Multiblockpolymere.

. . .

Unter Polybutadien werden erfindungsgemäß die verschiedenen strukturisomeren Homopolymeren des 1,3-Butadiens verstanden. Der Begriff umfaßt jedoch auch Copolymere, und unter diesen solche, bei denen Butadien für den chemischen Charakter der Verbindung ausschlaggebend ist. Die Homopolymeren des Butadiens können in zwei Strukturisomeren vorliegen, nämlich als 1,4-Polybutadien oder als 1,2-Polybutadien. 1,4-Polybutadiene sind linear, unverzweigt und enthalten in der Hauptkette Doppelbindungen, die "cis" oder "trans" konfiguriert sein können. Die 1,2-Polybutadiene enthalten Seitengruppen mit einer vinylischen Doppelbindung.

Als Ausgangsmaterialien für die erfindungsgemäßen lufttrocknenden Lackbindemittel sind die Epoxidationsprodukte aller genannten Polymeren, bevorzugt jedoch der Polybutadien-Isomeren, geeignet. Nach einer ersten Ausführungsform der Erfindung können beispielsweise teilepoxidierte cis-1,4-Polybutadiene eingesetzt werden. So sind 1,4-Polybutadiene mit mehr als 20 % cis-konfigurierten Doppelbindungen geeignet. Besonders geeignet sind derartige Produkte mit 70 % cis-konfigurierten Doppelbindungen, die im Handel angeboten werden. Es ist bekannt, daß cis-1,4-Polybutadiene sehr gute Trocknungseigenschaften aufweisen, so daß diese Rohstoffe in den Fällen bevorzugt sind, in denen rasche Trocknung erwünscht ist.

Nach einer weiteren Ausführungsform der Erfindung können auch 1,4-Polybutadiene verwendet werden, die mehr als 20 % transständige Doppelbindungen aufweisen, bevorzugt Produkte mit mehr als 50 % transständigen Doppelbindungen. Aufgrund der höheren Steifheit dieser Produkte wird der Fachmann trans-1,4-Polybutadiene insbesondere dann als Rohstoff wählen, wenn auf höhere Härte des Lackfilms geachtet wird.

Eine weitere Ausführungsform betrifft Poly-1,2-butadiene, also Materialien mit vinylischen Doppelbindungen. Ein sehr gut

. . .

geeignetes Ausgangsmaterial ist dabei ein Produkt mit 20 bis 98 % seitengruppenständigen Doppelbindungen, besonders bevorzugt mit mehr als 80 oder auch mehr als 90 % seitengruppenständigen Doppelbindungen.

In der Mehrzahl der Fälle wird der Fachmann Isomerengemische von Polybutadienen einsetzen, also etwa 1,4-Polybutadiene mit 20 − 70 % cis-ständigen Doppelbindungen und/oder 20 − 50 % transständigen Doppelbindungen, die daneben auch noch 0 − 3%, 3 − 30% oder noch mehr Seitengruppen mit vinylischen Doppelbindungen aufweisen können. Bezüglich der Herstellbarkeit von Polybutadienen mit unterschiedlicher Konfiguration gilt das allgemeine Fachwissen der Polymerchemie, verwiesen sei beispielsweise auf die Monographie "Makromoleküle" von H.G. Elias, 4. Auflage, Hüthig und Wepf-Verlag, Basel, Heidelberg, New York, Seiten 676 (Konfigurationänderung "cis" zu "trans") sowie S. 744 − 746 und 1012 ff.

Die erfindungsgemäßen lufttrocknenden Lackbindemittel können außer aus epoxidierten Homopolymeren des 1,3-Butadien auch aus epoxidierten Copolymeren hergestellt werden. Geeignete Copolymere sind Copolymere aus Butadien und Styrol, Copolymere aus Butadien und Acrylnitril sowie Copolymere aus Butadien, Styrol und Acrylnitril. In jedem Fall soll der Butadienanteil nicht unter 50 Gew.-% liegen.

Die erfindungsgemäßen lufttrocknenden Lackbindemittel basieren, wie ausgeführt, auf epoxidierten Polybutadienen. Die Epoxidation von Butadien ist bekannt; das Epoxidationsverfahren ist wenig kritisch. So können alle technisch üblichen Epoxidationsmaßnahmen durchgeführt werden, z.B. die Epoxidation mit Persäuren, wie Peressigsäure.

Wenngleich den erfindungsgemäßen lufttrocknenden Lackbindemitteln epoxidierte Polybutadiene mit bis zu 12 Gew.-%

. . .

Epoxidsauerstoff zugrunde liegen können, so sind doch epoxidierte Polybutadiene mit 2,5 - 10 Gew.-% und insbesondere 3 - 7 Gew.-% Epoxidsauerstoff bevorzugt. Pro 100 ursprünglich vorhandene Doppelbindungen können somit fast alle der Epoxidation unterworfen werden, wobei der Fachmann darauf zu achten hat, daß dann eine befriedigende Lufttrocknung durch einen entsprechend hohen Anteil ungesättigter Fettsäuren erreicht wird. Bevorzugt ist es, 5 - 50 % der ursprünglich vorhandenen Doppelbindungen zu epoxidieren, besonders günstige Ergebnisse werden erreicht, wenn 10 - 25 % der Epoxidgruppen epoxidiert sind. Die vorstehenden Angaben bezüglich "Gew.-% Epoxidsauerstoff" beziehen sich jeweils auf die Polymere.

Wenngleich auch das Molekulargewicht der epoxidierten Polymeren, bevorzugt der epoxydierten Polybutadiene, als Ausgangsverbindungen für die lufttrocknenden Lackbindemittel wenig kritisch ist, so ist es doch im Hinblick auf die Trocknungseigenschaften der Lacke einerseits und auf die Viskosität der Polymerlösungen andererseits wünschenswert, in gewissen Grenzen zu arbeiten. So werden auf Basis epoxidierter Polymerer mit einem Zahlenmittel des Molekulargewichts von weniger als 500 nur langsam trocknende Lackbindemittel erhalten, während bei einem Zahlenmittel des Molekulargewichts über 5000 oder gar über 10000 bereits recht hochviskose Produkte entstehen, die sich nur schwer zu festkörperreichen Lacken konfektionieren lassen. Ein besonders günstiges Zahlenmittel des Molgewichts der epoxidierten Polymeren liegt zwischen 1000 und 2000. Zweckmäßigerweise wird der Fachmann bei der Berechnung des Molekulargewichts z.B. eines Copolymeren von Polybutadien nur den auf 1,3-Butadien zurückgehenden Anteil werten, d.h. daß bei Copolymeren mit nur 50 % 1,3-Butadienanteil die unteren Grenzen des Molgewichts zu verdoppeln sind.

Die erfindungsgemäßen lufttrockenden Lackbindemittel enthalten als Seitengruppen als Ester gebundene ungesättigte Carbonsäurereste. Die Carbonsäurereste gehen auf ungesättigte Carbonsäuren oder deren Mischungen zurück. Es werden ungesättigte Carbonsäuren mit C-Zahlen im Bereich von 6 bis 22 verwendet, wobei diese einzeln oder auch in Mischungen beliebigen Verhältnisses miteinander eingesetzt werden können. Bevorzugt, da in natürlichen Fetten oder Ölen vorkommend, sind Mischungen gesättigter und ungesättigter Carbonsäuren mit 12 – 22 C-Atomen und insbesondere mit 16 – 22 C-Atomen, die eine oder mehrere Doppelbindungen enthalten oder auch gesättigte Beimengungen aufweisen können. Dabei wird von Carbonsäuremischungen ausgegangen, die eine Jodzahl von 50 – 250, vorzugsweise 100 – 200, aufweisen. In einer besonders bevorzugten Ausführungsform der Erfindung werden als Carbonsäuren Fettsäuremischungen nativer Fette oder Öle eingesetzt, beispielsweise Fettsäuremischungen aus Palmöl, Erdnußöl, Baumwollsaatöl, Sojabohnenöl, Sonnenblumenöl, Leinöl, Rüböl, Ricinenfett, tierischen Fetten oder seetierischen Fetten.

Die zur Modifizierung der erfindungsgemäßen lufttrocknenden Lackbindemittel eingesetzten Carbonsäuren oder Carbonsäuremischungen können weiterhin aromatisch ungesättigte Carbonsäuren enthalten. Um den lufttrocknenden Charakter nicht zu stören, ist jedoch für die aromatischen Carbonsäuren eine Obergrenze bei 50 Gew.-% der gesamten Carbonsäuremischung anzusetzen, vorzugsweise werden nur 25 Gew.-% oder auch nur 10 Gew.-% aromatisch ungesättigte Carbonsäuren eingesetzt. Bevorzugte aromatisch ungesättigte Carbonsäuren sind Benzoesäure, Salicylsäure oder deren alkylsubstituierte Derivate. Bei der Verwendung von Salicylsäure hat der Fachmann darauf zu achten, daß die OH-Zahl der lufttrocknenden Bindemittel unter 25 bleibt, um die Wasserfestigkeit zu gewährleisten. Von den alkylsubstituierten Benzoesäuren und/oder Salicylsäuren sind Derivate geeignet, die eine oder bis zu 3 Methyl-, Ethyl-, Propyl-, Butyl-, Isobutyl- oder Tertiärbutylgruppen aufweisen.

. . .

Die erfindungsgemäßen lufttrocknenden Lackbindemittel enthalten die Monocarbonsäuren entweder direkt über Estergruppen an das Polybutadiengerüst gebunden oder über eine Zwischengruppe, die sich von einem mehrfunktionellen Alkohol oder einem Hydroxyalkylamin ableitet. Als mehrfunktionelle Alkohole, d.h. als Alkohole mit zwei oder mehr Hydroxygruppen, sind hier aliphatische Alkohole mit 2 bis 6 Hydroxygruppen geeignet, die 2 - 12 C-Atome aufweisen und bis zu 3 Ether-Sauerstoffatome enthalten können. So können als difunktionelle Alkohole beispielsweise die in der Lackindustrie üblichen Diole, wie Ethylenglykol, Propylenglykol, Neopentylglykol oder deren Di- und Trimere mit 2 bzw. 3 Ether-Sauerstoffbrücken im Molekül eingesetzt werden. Geeignete Triole sind Glycerin, Trimethylolethan, Trimethylolpropan. Geeignete Alkohole der Funktionalität 4 sind beispielsweise Pentaerythrit oder die Dimeren der zuvor genannten Triole. Ein aliphatischer Alkohol mit 6 OH-Gruppen ist beispielsweise Sorbitan, geeignet sind hier jedoch auch die Tetrameren der zuvor genannten Triole mit 3 Ether-Sauerstoffbrücken im Molekül.

Als Hydroxyalkylamine verwendbar sind all diejenigen Amine, die am N-Atom mindestens eine Hydroxyalkylgruppe gebunden halten. Beispielsweise sind Monoethanolamin oder Diethanolamin bevorzugte Hydroxyalkylamine.

Die erfindungsgemäßen lufttrocknenden Lackbindemittel weisen zweckmäßigerweise ein Gesamtmolekulargewicht zwischen 1500 und 10000 auf. Dabei verlängern sich bei Unterschreiten des unteren Grenzwertes die Trocknungszeiten, während bei Überschreiten des oberen Grenzwertes die Viskosität ansteigt und daher nur noch schwer festkörperreiche Lacke hergestellt werden können. Ein besonders günstiger Molekulargewichtsbereich liegt zwischen 2500 und 7000. Die genannten Molekulargewichte sind Zahlenmittel, man erhält sie aus dem über die aus den kolligativen Eigenschaften oder unter anderen Parametern bestimmbaren Molekulargewichte der verwendeten Polymere, bevorzugt der Polybutadiene, dem

. . .

Epoxidationsgrad und dem Molekulargewicht der eingesetzten Modifizierungsmittel.

Bevorzugt als Modifizierungsmittel sind mehrwertige Alkohole wie Trimethylolpropan, Ditrimethylolpropan und Glycerin.

Zur Herstellung der erfindungsgemäßen lufttrocknenden Lackbindemittel wird von epoxidierten Polymeren, beispielsweise Polybutadienen, ausgegangen und diese mit den ungesättigten Carbonsäure oder deren Mischungen umgesetzt. Sollen Produkte hergestellt werden, die zwischen dem Polybutadiengrundkörper und dem ungesättigten Carbonsäurrest ein Zwischenglied auf Basis eines mehrfunktionellen aliphatischen Alkohols oder eines Hydroxyalkylamins enthalten sollen, so werden die epoxidierten Polybutadiene zunächst mit den entsprechenden Alkoholen bzw. Hydroxyalkylaminen umgesetzt und dann anschließend mit den ungesättigten Carbonsäuren oder deren Mischungen verestert. Die Umsetzung der Polymeren, z.B. von Polybutadien, mit einer oder mehreren ungesättigten Carbonsäuren findet bei Temperaturen zwischen 200 und 250°, vorzugsweise um 230° statt. Günstigerweise wird die Reaktion unter Inertgasen (Stickstoff) geführt und das Reaktionswasser entfernt. Für die Veresterung geeignete übliche Katalysatoren können hier verwendet werden. Geeignete Katalysatoren sind beispielsweise metallorganische Verbindungen der Elemente Zinn oder Titan. Besonders geeignet sind zinnorganische Verbindungen, so z.B. saure zinnorganische Verbindungen.

Besonders geeignet ist ein Katalysator mit der Handelsbezeichnung Swedcat 3 von der Firma Swedstab-AB, dabei handelt es sich um eine saure zinnorganische Verbindung. Die Umsetzung kann in Substanz im Stickstoffstrom oder auch in einem geeigneten Lösungsmittel durchgeführt werden. Geeignete Lösungsmittel, die geeignet sind, das bei der Veresterung entstehende Wasser zu entfernen, sind hochsiedende Kohlenwasser- stoffe, wie z.B. Xylol. Pro mol Epoxidgruppen können bis zu 2 mol Fettsäuren

. . .

eingesetzt werden. Es hat sich als günstig erwiesen, mehr als 1 mol, jedoch weniger als 2 mol Fettsäuren einzusetzen, so beispielsweise 1,7 - 1,9 mol Fettsäure pro mol Epoxidgruppen. Übliche Reaktionsdauer der Umsetzung ist in Abhängigkeit von Katalysator und Temperatur zwischen 2 und 12 Stunden. Es hat sich gezeigt, daß bei einem molaren Unterschuss von 15 - 20°, bezogen auf die Äquivalenz 2 mol Fettsäure pro mol Epoxidgruppe, Produkte erhalten werden, die sowohl geringe OH-Zahl als auch geringe Säurezahl aufweisen, wo hingegen bei der direkten Äquivalenz mehr oder minder große Mengen an Carbonsäuregruppen übrig bleiben und auf diese Weise eine störende Säurezahl schaffen.

Zur Herstellung der erfindungsgemäßen lufttrocknenden Lackbindemitteln mit mehrfunktionellen Alkoholen oder Hydroxyalkylaminen als Brücke zwischen Polybutadienanteil und den ungesättigten Carbonsäuren bzw. Carbonsäuremischungen werden epoxidierte ungesättigte Polymere, z.B. epoxidierte Polybutadiene, zunächst mit den mehrfunktionellen Alkoholen bzw. mit Hydroxyalkylamin umgesetzt. Die Reaktion kann mit Basen, wie z.B. Alkali oder Erdalkalihydroxiden oder auch tertiären Aminen katalysiert werden. Die Reaktionstemperaturen liegen zwischen 150 und 200°, insbesondere zwischen 160 und 180°, wobei die Reaktionszeiten im Bereich von einigen Stunden liegen. Um besonders günstige Produkte zu erhalten, ist es bei dieser Reaktion angezeigt, den Katalysator und den mehrfunktionellen Alkohol bzw. das Hydroxyalkylamin im Reaktionsgefäß vorzulegen und das epoxidierte Polybutadien im Verlaufe der Reaktion als solches oder in Lösung kontinuierlich oder portionsweise zuzugeben. Zur Entfernung des basischen Katalysators kann dieser mit Säuren, beispielsweise HCl neutralisiert und dann z.B. durch Heißfiltration abgetrennt werden. Die so hergestellten hydroxylgruppenhaltigen Verbindungen auf Basis von Polybutadienen werden mit ungesättigten Monocarbonsäuren erschöpfend verestert bis die OH-Zahl unter 25, vorzugsweise

. . .

unter 15 oder insbesondere unter 10 gefallen ist. Die Veresterung kann in üblicherweise katalysiert werden. So können auch hier beispielsweise zinnorganische Verbindungen oder titanorganische Verbindungen, insbesondere saure zinnorganische Verbindungen eingesetzt werden.

In jedem Falle wird angestrebt, so gut wie alle OH-Gruppen zu verestern, die Rest-OH-Zahl unter 25, ja sogar unter 5 zu halten und die Rest-Säurezahl ebenfalls unter 15, vorzugsweise unter 10 und insbesondere unter 5 zu halten.

Die erfindungsgemäßen Lackbindemittel sind in lufttrocknenden Lacken einsetzbar. Dazu werden sie mit den bei Alkydharzen, insbesondere lufttrocknenden Alkydharzen, üblichen Hilfsstoffen versehen. So können Lacke auf Basis der erfindungsgemäßen Produkte, gewünschtenfalls Pigmente, Pigmentdispergatoren, Filmbildungs- und Verlaufshilfsmittel oder Haftvermittler enthalten. In jedem Fall ist es angezeigt, die bei Alkydharzen üblichen Sikkative oder Sikkativgemische und/oder Hautbildungsverhinderungsmittel hier einzusetzen. Geeignet sind Sikkative auf Basis von Verbindungen des Aluminiums, des Cobalts, des Bleis, des Mangans, des Zirkons oder von weiteren dem Fachmann in diesem Zusammenhang geläufigen Übergangsmetallen. Günstige Ergebnisse werden mit Sikkativen erhalten, die sowohl Aluminium als auch Zirkon enthalten. Wichtige Aluminiumverbindungen sind die Aluminium-mono-acetylacetonat-dialkoholate. Die Sikkative werden in üblichen Mengen eingesetzt. So wird normalerweise auf 100 g Harz 0,4g einer 6 %igen (Gew.-% Co) Cobaltsalzlösung oder 2,5 g einer 6 %igen (Gew.-Teile Zr) Zirkonsalzlösung eingesetzt.

Lösungen der erfindungsgemäßen lufttrocknenden Bindemittel in üblichen Lacklösungsmitteln wie aliphatischen oder aromatischen Kohlenwasserstoffen mit unterschiedlichen Siedepunkten zeichnen sich durch vergleichsweise niedere Viskosität aus. So können mit

. . .

Hilfe der erfindungsgemäßen Produkte streich- und spritzbare Lacke hergestellt werden, die mehr als 60 Gew.-%, vorzugsweise mehr als 75 Gew.-% und in Einzelfällen bis zu 90 Gew.-% und mehr Festkörper enthalten. Auch sind streichbare lösungsmittelfreie Lacke (full solid) herstellbar.

Nach einer besonderen Ausführungsform der Erfindung können die erfindungsgemäßen lufttrocknenden Lackbindemittel zu Lösungen verarbeitet werden, bei denen ein Teil des Lösungsmittels durch sogenannte Reaktivverdünner ersetzt ist. Unter Reaktivverdünnern sind Produkte zu verstehen, die einerseits die Viskosität der Zubereitung wie ein Lösungsmittel herabsetzen, andererseits aber aufgrund ihrer Reaktivität, hier ihre Reaktivität in Zusammenhang mit der Lufttrocknungsreaktion, in den Lackfilm fest eingebaut werden.

Geeignete Reaktivverdünner, die mit den erfindungsgemäßen Lackbindemitteln zusammen verwendet werden können, sind Polybutadiene, z.B. cis-1,4-Polybutadien sowie ungesättigte Ester. An ungesättigten Estern sind in erster Linie die Ester alpha-ß-ungesättigter Carbonsäuren, beispielsweise Acryl- oder Methacrylsäure mit ungesättigten Fettalkoholen, z.B. mit ungesättigtem Oleylalkohol zu nennen. Weiter geeignet sind auch die Ester ungesättigter Fettsäuren mit ungesättigten Diolen, z.B. Ester einer destillierten Sonnenblumenölfettsäure mit hohem Anteil an Ölsäure und Linolsäure mit dem ungesättigten Diol Butendiol. Bei der Verwendung derartiger Reaktivverdünner, die ja zum Festkörper gerechnet werden können, entstehen Lackzubereitungen, bei deren Trocknung nur noch 25 Gew.-% Lösungsmittel frei werden, in Einzelfällen auch nur 10 oder weniger Gew.-%. Wie aus den Beispielen ersichtlich, gestattet die Erfindung die Herstellung von Lacken mit einem typischen Alkydharz-Anwendungsprofil und dem Vorteil eines hohen Feststoffgehaltes, also einer nur noch geringen Lösungsmittelfreisetzung bei Verarbeitung.

. . .

Weitere erfindungsgemäß einsetzbare Polymere sind:

Cyclopentadien-α-methylstyrol-Copolymere Polypentadien-(1.3) (Piperylen) und seine Copolymeren Polycycloocten (Cyclooctenamer) Copolymere des Vinylchlorids mit Bicyclo(2.2.1)2.5-
  heptadien oder Bicyclopentadien depolymerisierter Butylkautschuk Butadien-α-methylstyrol-Copolymere

Butadien-α-methylstyrolmethylmethacrylat-Blockcopolymere

Cyclopentadien-Styrol-Copolymere

Cyclopentadien-Harze Carboxyl- und OH-terminierte Polybutadiene.

. . .

Die Erfindung wird durch die nachfolgenden Beispiele näher erläutert.

## B e i s p i e l e

### Beispiel 1

Die Eigenschaften der eingesetzten epoxidierten Polybutadiene sind in Tabelle 1 aufgeführt:

. . .

D 7138/7413 EP

T A B E L L E   I

| Nr. | Handelsname (Hersteller) | Gew.-% Epoxid-Sauerstoff | Isomerenverteilung (%) | | | Molge-wicht |
|---|---|---|---|---|---|---|
| | | | cis 1,4 | trans 1,4 | 1,2 (Vinyl) | |
| 1. | Lithene PM epox. (Chemetall) | 3,2 | 15 - 25 | 30 - 40 | 50 | 1500 |
| 2. | Poly-bd R45HT epox. (Chemetall) | 6,15 | 60 | 20 | 20 | 2800 |
| 3. | Polyöl-Hüls 110 epox. (CWH) | 8,6 | 75 | 24 | 1 | 1500 |
| 4. | Nissin BF 1000 Resin (Nippon Soda) | 7,2 | < 15 | <15 | > 85 | 1000 |
| 5. | Lithene PM epox. (Chemetall) | 3,4 | 15 - 25 | 30 - 40 | 50 | 1500 |
| 6. | Lithene PM epox. (Chemetall) | 4,7 | 15 - 25 | 30 - 40 | 50 | 1500 |
| 7. | Polyöl-Hüls 110 epox. (CWH) | 4,4 | 75 | 24 | 1 | 1500 |
| 8. | Polyöl-Hüls 110 epox. (CWH) | 3,1 | 75 | 24 | 1 | 1500 |

- 17 -

## Beispiel 2

Umsetzung von epoxidierten Polybutadienen mit Fettsäuren

In einer Standard-Laborapparatur aus 3-Hals-Rundkolben, Rührer, Thermometer, Wasserabscheider und Rückflußkühler wurden gemischt:

> 300 g (0,6 mol) epoxidiertes Polybutadien Nr. 1
> (Beispiel 1)
> 285 g modifizierte Sonnenblumenöl-Fettsäure
> (Zusammensetzung: 2 % Stearinsäure, 27 %
> Ölsäure, 63 % Linolsäure, 1 % Linolensäure,
> 1 % Arachinsäure)
> 1 g Katalysator Swedcat 3 (Swedstab AB) (saure
> zinnorganische Verbindung)
> 100ml Xylol/Stickstoff als Inertgas

Der Ansatz wurde aufgeheizt, dabei wurde soviel Xylol abdestilliert, bis sich die Temperatur auf 230 - 240°C einstellte. Es wurden azeotrop 9,5 ml Kondensat (Reaktionswasser) abgeschieden. Das Lösungsmittel wurde dann durch Vakuum-Destillation entfernt. Die Gesamtreaktionszeit betrug 6 - 8 Stunden, die Säurezahl des Harzes war 6,6 ml KOH pro Gramm, die Cone und Plate-Viskosität bei 25°C betrug ca. 3500 mPas.

## Beispiel 3

Beispiel 2 wurde wiederholt, jedoch wurden diesmal 200g epoxidiertes Polybutadien Nr. 8 und 192 g der bei Beispiel 2 beschriebenen modifizierten Sonnenblumenöl-Fettsäure eingesetzt. Die Menge an Reaktionswasser betrug 6 ml, die Säurezahl 11,1, die Viskosität 2050 mPas.

. . .

## Beispiel 4

Beispiel 2 wurde wiederholt, es wurden 200 g epoxidiertes Polybutadien Nr.2 eingesetzt sowie 366 g der unter 2 beschriebenen modifizierten Sonnenblumenöl-Fettsäure. Die Reaktionswassermenge betrug 12 ml, die Säurezahl 12,3, die Viskosität 5000 mPas.

## Beispiel 5

Eingesetzt wurden 200 g epoxidiertes Polybutadien Nr. 3 sowie 269 g modifizierte Sonnenblumenöl-Fettsäure. Es wurde wie in Beispiel 2 verfahren. Die Reaktionswassermenge betrug 9 ml, die Säurezahl 12,5, die Viskosität 5200 mPas.

## Beispiel 6

Eingesetzt wurden 200 g epoxidiertes Polybutadien Nr. 4 sowie 225 g modifizierte Sonnenblumenöl-Fettsäure. Es wurde verfahren wie in den vorstehenden Beispielen. Die Reaktionswassermenge betrug 7,5 ml, die Viskosität 2500 mPas.

## Beispiel 7

Eingesetzt wurden 200 g epoxidiertes Polybutadien Nr. 3 sowie 190 g einer Leinöl-Fettsäure (50 Gew.-% Linolensäure, 15 Gew.-% Linolsäure, 20 Gew.-% Ölsäure, Rest gesättigte Fettsäuren mit 14 - 20 C-Atomen). Die Reaktionswassermenge betrug 6 ml, die Säurezahl 9,3, die Viskosität 1600 mPas.

. . .

Beispiel 8

Umsetzung von epoxidierten Polybutadienen mit mehrfunktionellen Alkoholen. Es wurde in der unter Beispiel 2 beschriebenen Laborapparatur gearbeitet. Eingesetzt wurden:

272,5 g  dimeres Trimethylolpropan
4,5 g  Kaliumhydroxid (7 mol-% bezogen auf Epoxidsauerstoff)
400   g  epoxidiertes Polybutadien Nr. 7
400 ml  Diethylenglykol-dimethylether

Zur Durchführung der Reaktion wurde das dimere Trimethylolpropan und das Kaliumhydroxid im Reaktionsgefäß vorgelegt. Es wurde dann das epoxidierte Polybutadien gelöst in Diethylenglykol-dimethylether zugegeben und 6 Stunden bei der Siedetemperatur des Reaktionsgemisches (165 - 175°C) gehalten. Nach Neutralisation mit Salzsäure wurde heiß abfiltriert. Das Lösungsmittel wurde im Vakuum bei einer maximalen Temperatur von 170°C abdestilliert. Das Endprodukt hatte eine OH-Zahl von 314, der Epoxidsauerstoffgehalt war unter 0,1 gefallen.

Beispiel 9

Es wurde wie in Beispiel 8 verfahren, jedoch wurden eingesetzt:

183,6 g  dimeres Trimethylolpropan
250   g  epoxidiertes Polybutadien Nr. 6
250   g  Diethylenglykol-dimethylether
2   g  Kaliumhydroxyd (5 mol-% bezogen auf Epoxidsauerstoff)

Die OH-Zahl betrug 388,3, die Säurezahl 0,3.

. . .

Beispiel 10

Es wurde wie in Beispiel 8 verfahren, eingesetzt wurden:

    79 g      dimeres Trimethylolpropan

    0,9 g      Kaliumhydroxyd     (5     mol-%     bezogen     auf Epoxidsauerstoff)

    150 g      epoxidiertes Polybutadien Nr. 5

    150 g      Diethylenglykol-dimethylether

Die OH-Zahl betrug 313,3, die Säurezahl 0,8.

Beispiel 11

Verfahren wurde wie in Beispiel 8, eingesetzt wurden:

    50 g      epoxidiertes Polybutadien Nr. 8

    23 g      dimeres Trimethylolpropan

    140 g      Diethylenglykol-dimethylether

                 sowie

    0,3 g      Kaliumhydroxid (5 mol-% bezogen auf Epoxidsauerstoff)

Die OH-Zahl betrug 237,2.

Beispiel 12

Zur Veresterung der Umsetzungsprodukte epoxidierter Polybutadiene mit mehrfunktionellen Alkoholen wurde in Analogie zu Beispiel 2 verfahren. Eingesetzt wurden:

    178,7 g      Reaktionsprodukt aus Beispiel 8 (OH-Zahl 314)

    266 g      modifizierte              Sonnenblumenöl-Fettsäure (Zusammensetzung siehe Beispiel 2)

    0,9 g      Katalysator Swedcat 3 (Swedstab AB)

. . .

(saure organische Zinnverbindung)
50 ml Xylol und Stickstoff als Inertgas.

Die Temperatur betrug maximal 240°C, die Reaktionszeit 7 Stunden. Es wurden 17 ml Reaktionswasser abgeschieden und anschließend das Lösungsmittel im Vakuum abdestilliert. Das Harz hatte eine Säurezahl von 3,1 mg KOH pro Gramm, die Viskosität (25 °C) betrug 820 mPas.

Beispiel 13

Es wurde wie in Beispiel 12 verfahren, eingesetzt wurden:

290    g   des Reaktionsproduktes aus Beispiel 9
           sowie
504    g   modifizierte Sonnenblumenöl-Fettsäure
           (0,95 mol pro mol OH-Gruppen)
1,6    g   Katalysator Swedcat 3

Abgeschieden wurden 32 ml Reaktionswasser, die Säurezahl betrug 1,26, die Viskosität bei 25°C 1300 mPas.

Beispiel 14

418    g   Reaktionsprodukt aus Beispiel 11 und
480    g   modifizierte Sonnenblumenöl-Fettsäure
           sowie
1,8    g   Katalysator Swedcat 3

wurden analog Beispiel 12 umgesetzt. 33 ml Reaktionswasser wurden abgeschieden, die Säurezahl betrug 0,9, die Viskosität 1120 mPas (25°C).

. . .

Beispiel 15

Die vorstehend beschriebenen Harze wurden als Klarlacke ohne Zusatz von Lösungsmitteln verarbeitet. Als Sikkative wurden pro 100 g Harz, wie in Tabelle II beschrieben, die folgenden einzelnen Produkte paarweise eingesetzt:

| | |
|---|---|
| 0,4 g | einer Kobalt-Sikkativlösung enthaltend 6 Gew.-% Kobalt |
| 2,5 g | einer Zirkon-Sikkativlösung enthaltend 6 % Zirkon |
| 20 g | einer Aluminium-Sikkativlösung (Alusek 588, entsprechend 1,5 % Aluminium) |

Weiterhin wurden pro 100 g Harz 2,0 g eines üblichen Hautverhinderungsmittels (Dehydril NRC[R], Henkel KGaA) eingesetzt. Fakultativ konnten 5 - 10 Gew.-%, bezogen auf Harz, Butanol oder Xylol mitverwendet werden.

Die Klarlacke wurden mit einer Rakel auf Glasplatten aufgebracht, nach 24 Stunden, einer und zwei Wochen wurden Pendelhärten nach König bestimmt. Die Ergebnisse sind in Tabelle 2 zusammengestellt.

. . .

T A B E L L E    II

Anwendungstechnische Eigenschaften der Lacke

| Produkt aus | Sikk. | Pendelhärte nach König (DIN 53 157) | 24 h | 1 Woche | 2 Wochen |
|---|---|---|---|---|---|
| 2 | Al Co | | 40 | 50 | 85 |
| 3 | Co Zr | | 45 | 62 | 74 |
| 4 | Al Co | | 32 | 70 | 98 |
| 5 | Co Zr | | 25 | 30 | 35 |
| 6 | Al Co | | 30 | 40 | 56 |
| 7 | Al Co | | 35 | 54 | 78 |
| 12 | Al Co | | 30 | 35 | 40 |
| 12 | Co Zr | | 25 | 20 | 31 |
| 13 | Al Co | | 35 | 40 | 44 |
| 14 | Co Zr | | 26 | 29 | 31 |
| 14 | Al Co | | 31 | 38 | 43 |

## Beispiel 16

Allgemeine Vorschrift für die Epoxidation der ungesättigten Polymeren

In einer Dreihalskolbenrührapparatur mit Rückflußkühler und Thermometer wurden die angegebenen Polymeren mit der angegebenen Menge Benzin (Siedebereich 110 – 140°C) verdünnt und die angegebene Menge 85 %ige Ameisensäure zugesetzt. Bei 55°C wurde dann im Verlauf von 1 Stunde die angegebene Menge 70 %iges $H_2O_2$ zugetropft (Vorsicht: starke Exothermie!). Nach 3 Stunden Nachreaktion bei 55°C wurde das Reaktionsgemisch siebenmal mit 600 ml heißem Wasser gewaschen, auf Säure- und Peroxidfreiheit geprüft, das Lösungsmittel im Rotationsverdampfer abdestilliert und der Epoxidsauerstoffgehalt titrimetrisch bestimmt.

## Beispiel 17

Allgemine Vorschrift zur Umsetzung der Epoxide aus den ungesättigten Polymeren mit ungesättigten Fettsäuren.

In einer Dreihalskolbenrührapparatur mit Wasserauskreisungseinrichtung und Thermometer wurden die angegebenen Mengen des ungesättigten epoxidierten Polymeren mit der angegebenen Menge ungesättigter Fettsäure versetzt. Die Fettsäuremenge entspricht 1,7 mol Fettsäure/mol Epoxidgruppen. Es wurden 0,5 g Tetraisopropylorthotitanat und ca. 200 ml Xylol zugesetzt.

Der Ansatz wurde langsam erwärmt und soviel Xylol aus dem Wasserabscheider entnommen, daß sich eine Reaktionstemperatur von 190°C einstellte und dabei laufend im Xylolstrom Wasser ausgekreist wurde. Nachdem die angegebene Wassermenge abgeschieden wurde (die ungefähre Zeit hierzu ist angegeben), wurde das Produkt abgekühlt und die Kenndaten bestimmt.

. . .

## Beispiel 18

Herstellung von Klarlacken aus Umsetzungsprodukten von epoxidierten ungesättigten Polymeren mit ungesättigten Fettsäuren

100 g des angegebenen Harzes wurden mit 0,4 g einer Cobaltsikkativlösung (enthalten 6 Gew.-% Cobalt) und 2,5 g einer Zirkonsikkativlösung (enthalten 6 Gew.-% Zirkon) versetzt und durch Zusatz von Benzin (Siedebereich 110 - 140°) auf eine Viskosität von 100 mPa.s verdünnt. Mit einer Rakel wurden 100 μ Naßfilm auf Glasplatten gezogen und nach 1, 7 und 14 Tagen die Pendelhärte nach König / DIN 53157 bestimmt.

## Beispiel 19

Epoxidation von Butadien/Styrol-Copolymeren

250 g Ricon 100, ein Butadien/Styrol-Copolymer mit
80 % Butadien und 20 % Styrol (Molekulargewicht: 2200, 70 %
1,2-Struktur, Hersteller: Colorado Chemical, Jodzahl: ca. 300),
250 ml Benzin, 7,5 g Ameisensäure
85 %ig, 48 g $H_2O_2$ 70 %ig.

Epoxidation entsprechend der allgemeinen Vorschrift lieferte ein Produkt mit 2,56 % Epoxidsauerstoff.
Viskosität: 1040 mPa.s/100°C, $n_D^{20}$ = 1,5350.

## Beispiel 20

Umsetzung des Ricon 100-Epoxids mit Sonnenblumenfettsäure

253,4 g Ricon 100-Epoxid mit 2,56 % Epoxidsauerstoff
193   g Edenor SbO5 (Sonnenblumenfettsäure, HENKEL)
Veresterung entsprechend der allgemeinen Vorschrift. 4,7 ml Kondensat, 8 Stunden Reaktionszeit.

. . .

Kennzahlen des Produktes:

SZ: 8,2,   VZ= 78,6       $N_D^{20}$ = 1,5109

Viskosität: 90 %ig in Xylol = 21000 mPa.s

Ein daraus hergestellter Klarlack gemäß dem allgemeinen Beispiel zeigte folgende Eigenschaften:

Pendelhärte nach 1 Tag : 20 sec nach 7 Tagen: 60 sec nach 14 Tagen: 125 sec.

## Beispiel 21

Epoxidation von Polycyclopentadienen

300 g Escorez 8100 (Firma ESSO), ein Polycyclopentadien (Bromzahl: 55), 400 ml Benzin, 18 g Ameisensäure, 48 g $H_2O_2$. Epoxidation entsprechend der allgemeinen Vorschrift.

Produkt: 1,05 % Epoxidsauerstoff.

## Beispiel 22

Umsetzung von Polycyclopentadienepoxid mit Sonnenblumenfettsäure

253 g epoxidiertes Escorez 8100 mit 1,05 % Epoxid-

      sauerstoff,

   60 g Edenor SbO5 (Sonnenblumenfettsäure, HENKEL)

Umsetzung gemäß der allgemeinen Vorschrift.

3,6 ml Kondensat (ca. 8 Stunden)

Produkt: SZ = 7,8,   VZ = 30,6

      dunkelbraunes sprödes Harz

      Ein daraus hergestellter Klarlackfilm ergab

      folgende Pendelhärten:

. . .

$$1 \text{ Tag} = 17 \text{ sec}$$
$$7 \text{ Tage} = 34 \text{ sec}$$
$$14 \text{ Tage} = 34 \text{ sec.}$$

## Beispiel 23

Epoxidation des alternierenden Styrol/Butadien/Styrol-Copolymeren

250 g      des Styrol/Butadien/Styrol-alternierenden Copolymeren
250 ml     Benzin
7,5 g      g   $H_2O_2$, 70 %ig

wurden entsprechend der Standardvorschrift epoxidiert. Es resultierte ein Produkt mit 3,1 % Epoxidsauerstoff.

## Beispiel 24

Herstellung eines alternierenden Styrol/Butadien/Styrol-Copolymeren

71,2 g Butyllithium (15 %ig in Hexan) (0,17 mol)
212,3 g Tetrahydrofuran, über Aluminiumoxid getrocknet,

wurden in einer ausgeheizten Apparatur unter Argon vorgelegt und bei -70 bis -80° 104,1 g trockenes destilliertes Styrol (1 mol) und 108,2 g trockenes 1,3-Butadien (2mol) in Portionen von jeweils 20 g zugetropft. Zutropfzeit = 2 Stunden, Nachreaktion = 1 Stunde.

Dann wurde die Reaktion durch Zusatz von 50 g Methanol abgebrochen, das Produkt in 1 l Methanol gegeben, die Ölphase mit Methylenchlorid versetzt und fünfmal mit Wasser gewaschen. Nach Abdestillieren des Lösungsmittels verblieben 174 g eines alternierenden Styrol/ Butadien/Styrol-Copolymeren.

Molgewicht = 2200 (Dampfdruckosmometrie)

Jodzahl nach WTJS = 191

. . .

Styrol-Butadien-Verhältnis = 1 : 1,3.

Beispiel 25

Umsetzung des epoxidierten Styrol/Butadien/Styrol-alternierenden Copolymeren mit ungesättigter Fettsäure

100 g Styrol/Butadien/Styrol-Copolymer
3,1 % Epoxid
92  g Edenor SbO5 (Sonnenblumenfettsäure, HENKEL)
wurden entsprechend den Standardbedingungen kondensiert.
Kondensatmenge:  2,7 ml (ca. 8 Stunden)
SZ des Produkts: 5,3,   VZ = 90,7
Ein daraus hergestellter Klarlackfilm entsprechend den Standardbedingungen zeigte nach 1 Tag Pendelhärte = 10 sec, nach 7
Tagen = 30 sec, nach 14 Tagen = 39 sec.

Beispiel 26

Epoxidation von Butadien-Acrylnitril-Copolymeren

300 g Hycar 1300 X 29 (ein niedermolekulares OH-gruppenterminiertes Butadien-Acrylnitril-Copolymeres, ca. 10 % Acrylnitril,
Hersteller: BF GOODRICH), 500 ml Benzin, 18 g Ameisensäure,
96 g $H_2O_2$, 70 %ig.

Epoxidation unter Standardbedingungen,
Epoxidsauerstoffgehalt: 3,75 %
Viskosität: 110 000 mPa.s.

Beispiel 27

Umsetzung von epoxidiertem Butadien-Acrylnitril-Copolymeren mit
ungesättigter Fettsäure

300   g Hycar 1300 X 29, epoxidiert

3,75 % Epoxidsauerstoff 334,8 g Edenor SbO5 (Sonnenblumenfettsäure, HENKEL)

Veresterung unter Standardbedingungen 10,5 ml Kondensat (6 Stunden) mittelviskoses Harz

22 000 mPa.s

Säurezahl: 5,4

Verseifungszahl: 100

Ein daraus hergestellter Klarlackfilm ergab folgende Filmeigenschaften:

| Pendelhärte: | 1 Tag | = | 12 sec |
| | 1 Woche | = | 44 sec |
| | 14 Tage | = | 72 sec. |

## Beispiel 28

Epoxidation von Polyisopren

300 g Neorub DF, ein depolymerisierter Naturkautschuk Mn = 8800 Mw = 21 000

Lieferant: Weber & Schaer, Hamburg

300 ml Benzin

18  g Ameisensäure

95,6 g  $H_2O_2$, 70 %ig

Epoxidation unter Standardbedingungen

Produkt: 4,82 % Epoxidsauerstoff Viskosität (50 %ig in Xylol): 2500 mPa.s.

. . .

Beispiel 29

Umsetzung von epoxidiertem Polyisopren-Epoxid mit Fettsäure

97 g epoxidiertes Neorub DF, 4,82 % Epoxidsauerstoff 138,6 g Edenor SbO5 (Sonnenblumenfettsäure, HENKEL)

Umsetzung unter Standardbedingungen 4,4 ml Kondensat Produkt: Säurezahl = 17,5 Verseifungszahl = 117,8 Viskosität, 50 %ig in Xylol = 25 000 mPa.s.

Ein daraus hergestellter Klarlack hatte folgende Eigenschaften:

Pendelhärte:  1 Tag     =    20 sec 7 Tage    =    35 sec 14 Tage   =    45 sec

Beispiel 30

Umsetzung von epoxidierten Polybutadienen mit Diethanolamin 200 g Polyöl Hüls 110, epoxidiert, 3,58 % Epoxidsauerstoff

44,7 g Diethanolamin

wurden gemischt und auf 215°C erwärmt. Nach 4 Stunden wurde ein klares braunes Harz erhalten.

Aminzahl: 97,6

OH-Zahl : 290.

Beispiel 31

Umsetzung des Polybutadien-Epoxid-Umsetzungsproduktes mit

. . .

Diethanolamin mit ungesättigter Fettsäure

100  g des Umsetzungsproduktes aus dem vorhergehenden
      Beispiel
 98  g Edenor SbO5 (Sonnenblumenfettsäure, HENKEL)
0,5  g Zinnpulver
 40  ml Xylol

wurden unter Standardbedingungen bei 190-230°C verestert. Es entstanden 5,9 ml Kondensat. Die Säurezahl des Produktes betrug 0,6. Die Verseifungszahl betrug 99,1.

Viskosität: 4000 mPa.s

Ein daraus hergestellter Klarlackfilm hatte die folgenden Pendelhärten:

| 1 Tag   | = | 12 sec  |
| 7 Tage  | = | 25 sec  |
| 14 Tage | = | 36 sec. |

## Beispiel 32

Partielle Hydrierung von Polybutadien

500 g Polyöl-Hüls 110, 1,5 l Benzin 110 bis 140 °C sowie 15 g Aktivkohle mit 5 % Palladium (Engelhard-Katalysator) wurden in einem 5-l-Autoklav bei 150 °C über eine Stunde bei 20 bar hydriert. Der Katalysator wurde anschließend abfiltriert und das Benzin am Rotavapor im Vakuum bei 100 bis 110 °C abdestilliert.

Das erhaltene Produkt hatte eine Jodzahl nach Wijs von 153.

## Beispiel 33

Epoxidation des Polyöl-Hüls 110, partiell hydriert.

. . .

Der nachstehende Ansatz wurde entsprechend der Standardvor-schrift epoxidiert:

    250 g    Polyöl-Hüls 110, partiell hydriert aus Beispiel 32

    1 l    Tetrachlorkohlenstoff

    8,5 g    Ameisensäure, 85 %ig

    48 g    $H_2O_2$, 70 %ig

Es resultierte ein Produkt mit 2,7 % Epoxidsauerstoff.

### Beispiel 34

Umsetzung des partiell hydrierten, epoxidierten Polyöl-Hüls 110 mit ungesättigter Fettsäure

    250 g    partiell hydriertes Polyöl-Hüls 110, epoxidiert 2,7 % Epoxidsauerstoff, gemäß den Beispielen 32 und 33

    201 g    Edenor $SbO_5$ (Sonnenblumenfettsäure, HENKEL)

wurden gemäß den Standardbedingungen kondensiert, Reaktionsdauer: ca 9 Stunden. Es resultierte eine Kondensatmenge von 6,5 ml.

Das erhaltene Produkt wies eine Säurezahl von 7 auf. Ein daraus hergestellter Klarlackfilm – nach den Standardbedingungen – zeigte folgende Pendelhärten:

    nach 1 Tag    8 sec

    nach 7 Tagen    14 sec

    nach 14 Tagen    32 sec.

. . .

Patentansprüche

1. Lufttrocknendes Lackbindemittel aus epoxidierten, ungesättigen Polymeren und ungesättigten Carbonsäuren, dadurch gekennzeichnet, daß es sich um ein Ringöffnungsprodukt aus

(I) einem Epoxid eines ungesättigten Polymeren mit einem Zahlenmittel des Molekulargewichts im Bereich von 500 bis 5000 aus der Gruppe

(a) unhydrierte und/oder teilweise hydrierte Polybutadiene,

(b) unhydrierte und/oder teilweise hydrierte Polyisoprene,

(c) Copolymere aus Butadien und Isopren,

(d) Polychloropren,

(e) Copolymere von Polybutadien mit einem oder mehreren Monomeren aus der Gruppe Acrylnitril, Styrol, Ethen, Propen, Buten, i-Buten, Penten und Chloropren,

(f) Pentenamer,

(g) EPDM-Kautschuke,

(h) ungesättigte Kohlenwasserstoffharze,

(i) Cyclopentadienharze und

(j) Polynorbornen

einerseits und

(II) einer oder mehreren ungesättigten Carbonsäuren mit 6 bis 22 C-Atomen oder

einem oder mehreren Alkoholen mit 2 bis 6 Hydroxygruppen oder Hydroxyalkylaminen mit mindestens einer Hydroxyalkylgruppe, wobei die Hydroxygruppen mit einer oder mehreren ungesättigten Carbonsäuren mit 6 bis 22 C-Atomen bis zu einer OH-Zahl kleiner 25 verestert sind, andererseits handelt, dessen Säurezahl im Bereich von 0,1 bis 20 liegt.

. . .

2. Lufttrocknendes Lackbindemittel nach Anspruch 1, dadurch gekennzeichnet, daß die Jodzahl des ungesättigten Polymeren vor der Epoxidation im Bereich von 80 bis 450, bevorzugt im Bereich von 150 bis 450 liegt.

3. Lufttrocknendes Lackbindemittel nach Ansprüchen 1 und 2, dadurch gekennzeichnet, daß das verwendete ungesättigte Polymere ein Zahlenmittel des Molekulargewichts im Bereich von 600 bis 3000 hat.

4. Lufttrocknendes Lackbindemittel nach Ansprüchen 1 bis 3, dadurch gekennzeichnet, daß das verwendete Epoxid des ungesättigten Polymeren 1 bis 12 Gew.-%, bevorzugt 2,5 bis 10 Gew.-%, besonders bevorzugt 3,0 bis 7,0 Gew.-% Epoxidsauerstoff im Polymeren aufweist.

5. Lufttrocknendes Lackbindemittel nach Ansprüchen 1 bis 4, dadurch gekennzeichnet, daß es sich bei dem epoxidierten Polymeren um epoxidiertes Polybutadien mit ethylenischen Doppelbindungen handelt.

6. Lufttrocknendes Lackbindemittel nach Ansprüchen 1 bis 5, dadurch gekennzeichnet, daß es sich bei dem epoxidierten Polybutadien um ein 1,4-Polybutadien mit mehr als 20 %, bevorzugt mit mehr als 70 % cis-ständigen Doppelbindungen handelt.

7. Lufttrocknendes Lackbindemittel nach Ansprüchen 1 bis 5, dadurch gekennzeichnet, daß es sich bei dem epoxidierten Polybutadien um ein 1,4-Polybutadien mit mehr als 20 %, bevorzugt mehr als 50 % trans-ständigen Doppelbindungen handelt.

. . .

8. Lufttrocknendes Lackbindemittel nach Ansprüchen 1 bis 5, dadurch gekennzeichnet, daß es sich bei dem epoxidierten Polybutadien um ein Polymeres mit 20 % bis 98 % seitengruppenständigen Doppelbindungen handelt.

9. Lufttrocknendes Lackbindemittel nach Ansprüchen 1 bis 4, dadurch gekennzeichnet, daß es sich bei dem epoxidierten Polymeren um ein epoxidiertes Copolymeres aus Butadien, Styrol und Acrylnitril mit einem Butadienanteil von nicht weniger als 50 Gew.-% handelt.

10. Lufttrocknendes Lackbindemittel nach Ansprüchen 5 bis 9, dadurch gekennzeichnet, daß das epoxidierte Polybutadien ein Zahlenmittel des Molekulargewichts von 1000 bis 2000 aufweist.

11. Lufttrocknendes Lackbindemittel nach Ansprüchen 5 bis 10, dadurch gekennzeichnet, daß das epoxidierte Polybutadien 5 bis 50, bevorzugt 10 bis 25 Epoxidgruppen pro 100 im ungesättigten Polymeren vorhandenen Doppelbindungen aufweist.

12. Lufttrocknendes Lackbindemittel nach Ansprüchen 1 bis 11, dadurch gekennzeichnet, daß es sich bei den ungesättigten Carbonsäuren um Gemische von Fettsäuren, bevorzugt natürlichen Ursprungs, mit einer Jodzahl im Bereich von 50 bis 250 und einer Zahl von C-Atomen im Bereich von 12 bis 22, bevorzugt von 16 bis 22, handelt.

13. Lufttrocknendes Lackbindemittel nach Ansprüchen 1 bis 12, dadurch gekennzeichnet, daß es sich bei den Carbonsäuren um Gemische von Fettsäuren aus Palmöl, Erdnußöl, Baumwollsaatöl, Sojabohnenöl, Sonnenblumenöl, Leinöl, Rüböl, Ricinenfett, tierischen Fetten oder seetierischen Fetten handelt.

14. Lufttrocknendes Lackbindemittel nach Ansprüchen 1 bis 13, dadurch gekennzeichnet, daß die Carbonsäuren oder ihre

. . .

Gemische 0 bis 50 Gew.-%, bevorzugt 0 bis 25 Gew.-%, besonders bevorzugt 0 bis 10 Gew.-% aromatische ungesättigte Carbonsäuren, bezogen auf die Gesamtmenge an Carbonsäuren, enthalten.

15. Lufttrocknendes Lackbindemittel nach Anspruch 14, dadurch gekennzeichnet, daß die Carbonsäuren oder ihre Mischungen Benzoesäure oder deren alkylsubstituierte Derivate als aromatische ungesättigte Carbonsäuren enthalten.

16. Lufttrocknendes Lackbindemittel nach Ansprüchen 1 bis 15, dadurch gekennzeichnet, daß als Alkohole mit 2 bis 6 Hydroxygruppen aliphatische Alkohole mit 2 bis 12 C-Atomen und bis zu 3 Ethersauerstoffatomen enthalten sind.

17. Lufttrocknendes Lackbindemittel nach Anspruch 16, dadurch gekennzeichnet, daß als Alkohole mit mehreren Hydroxygruppen Diole, bevorzugt Ethylenglykol, Propylenglykol, Neopentylglykol und/oder Diethylenglykol, Triole, bevorzugt Glycerin, Trimethylolethan und/oder Trimethylolpropan, oder Tetraole, bevorzugt Pentaerythrit, Ditrimethylolethan und/oder Ditrimethylolpropan, enthalten sind.

18. Lufttrocknendes Lackbindemittel nach Ansprüchen 1 bis 15, dadurch gekennzeichnet, daß als Hydroxyalkylamine Ethanolamin und/oder Diethanolamin enthalten sind.

19. Lufttrocknendes Lackbindemittel nach Ansprüchen 1 bis 18, dadurch gekennzeichnet, daß das Gesamtmolekulargewicht des Ringöffnungsproduktes 1500 bis 10 000, bevorzugt 2500 bis 7000, beträgt.

20. Lufttrocknendes Lackbindemittel nach Ansprüchen 1 bis 19, dadurch gekennzeichnet, daß die Säurezahl im Bereich von 0,1 bis 10 bevorzugt im Bereich von 0,1 bis 5 liegt.

. . .

21. Verfahren zur Herstellung von lufttrocknenden Lackbindemitteln nach Ansprüchen 1 bis 20 durch Ringöffnung epoxidierter, ungesättigter Polymerer mit ungesättigten Carbonsäuren und/oder Alkoholen oder Hydroxy-substituierten Aminen, dadurch gekennzeichnet, daß man ein teilepoxidiertes, ungesättigtes Polymeres aus der Gruppe

    (a) unhydrierte und/oder teilweise hydrierte Polybutadiene,

    (b) unhydrierte und/oder teilweise hydrierte Polyisoprene,

    (c) Copolymere aus Butadien und Isopren,

    (d) Polychloropren,

    (e) Copolymere von Polybutadien mit einem oder mehreren Monomeren aus der Gruppe Acrylnitril, Styrol, Ethen, Propen, Buten, i-Buten, Penten und Chloropren,

    (f) Pentenamer,

    (g) EPDM-Kautschuke,

    (h) ungesättigte Kohlenwasserstoffharze,

    (i) Cyclopentadienharze und

    (j) Polynorbornen

der vollständigen Ringöffnung mit einer oder mehreren ungesättigten, monofunktionellen Carbonsäuren mit 6 bis 22 C-Atomen oder Alkoholen mit 2 bis 6 Hydroxygruppen oder Hydroxyalkylaminen mit mindestens einer Hydroxyalkylgruppe unterwirft und im Falle der Verwendung eines oder mehrerer Alkohole oder Hydroxyalkylamine das entstandene Polyol mit der gleichen oder einer oder mehreren anderen ungesättigten Carbonsäuren mit 6 bis 22 C-Atomen bis zu einer Rest-OH-Zahl kleiner 25 verestert.

22. Verfahren nach Anspruch 21, dadurch gekennzeichnet, daß man als teilepoxidiertes ungesättigtes Polymeres teilepoxidiertes Polybutadien verwendet.

. . .

23. Verwendung der lufttrocknenden Lackbindemittel nach Ansprüchen 1 bis 20 zusammen mit üblichen Zusatzstoffen wie Sikkativen, Pigmenten, Pigmentdispergatoren, Hilfsstoffen und gegebenenfalls Reaktiv-Verdünnern in lösungsmittelarmen Lacksystemen.

24. Verwendung nach Anspruch 23, dadurch gekennzeichnet, daß als Reaktiv-Verdünner 1,4-cis-Polybutadien, Ester ungesättigter Fettsäuren mit Diolen wie Butendiol und/oder Ester ungesättigter Fettalkohole mit $\alpha$,ß-ungesättigten Carbonsäuren eingesetzt werden.

. . .